# FASCICULE DE BREVET EUROPEEN

(11) **EP 0 444 996 B1**
(45) Date de publication et mention de la délivrance du brevet: **10.05.1995**
(21) Numéro de dépôt: 91400410.6
(22) Date de dépôt: 15.02.1991
(51) Int. Cl.: B62D 1/16

(54) **Dispositif de fixation d'une colonne de direction sur la carrosserie d'un véhicule automobile**
Vorrichtung für die Befestigung einer Lenksäule an den Aufbau eines Kraftfahrzeuges
Device for mounting a steering column on the body of a motor vehicle

(30) Priorité: 28.02.1990 FR 9002527
(43) Date de publication de la demande: 04.09.1991
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR); Barnabe, Jean Pierre, F-25700 Valentigney (FR); Mouhot, Frédéric, F-25420 Voujeaucourt (FR)
(74) Mandataire: Habasque, Etienne Joel Jean-François

(56) Documents cités:
- FR-A- 2 284 500
- US-A- 3 760 650
- US-A- 3 813 960

## Description

La présente invention concerne un dispositif de fixation d'une colonne de direction sur la carrosserie d'un véhicule automobile.

On connait déjà dans l'état de la technique un certain nombre de dispositifs de fixation de la colonne sur la carrosserie d'un véhicule automobile, dans lesquels la colonne de direction est reliée à un organe d'assemblage, et cet organe d'assemblage à la carrosserie par des moyens de fixation.

Ces moyens de fixation sont en général constitués par quatre systèmes à vis-écrou disposés aux quatres coins de l'organe d'assemblage.

Lors du montage et de la fixation de l'organe d'assemblage sur la carrosserie du véhicule, il y a donc lieu d'opérer un positionnement correct de cet organe par rapport au reste de la carrosserie puis quatre opérations de vissage pour fixer la colonne sur la carrosserie du véhicule.

On conçoit que ces opérations sont relativement complexes, longues et difficiles dans la mesure où on n'a pas toujours facilement accès aux différents points d'ancrage de cette colonne, notamment depuis que les fonctions remplies par ces colonnes de direction et les différentes possibilités de réglage de celles-ci, ont accru leur encombrement.

On connait également du document US-A-3 760 650, une colonne de direction à absorption d'énergie munie d'un dispositif de fixation selon la première partie de la revendication 1. L'arbre de direction comporte deux parties télescopiques l'une dans l'autre, cet arbre étant monté rotatif dans un tube enveloppe.

Ce tube enveloppe comporte à l'une de ses extrémités, un organe d'assemblage muni de moyens d'accrochage sur le reste de la structure du véhicule et à l'autre de ses extrémités, des moyens adaptés pour engendrer un effort mécanique entre la carrosserie et le tube pour assurer une fixation sous contrainte de l'organe sur la carrosserie.

Cependant, le dispositif décrit dans ce document présente un certain nombre d'inconvénients dans la mesure où le montage sous contrainte du tube enveloppe sur la carrosserie est limité par la présence de moyens d'absorption d'énergie formés par les ondulations de ce tube.

Le but de l'invention est donc de résoudre ces problèmes en proposant un dispositif de fixation qui soit simple, fiable et très rapide à mettre en oeuvre.

A cet effet, l'invention a pour objet un dispositif de fixation d'une colonne de direction sur la carrosserie d'un véhicule automobile, dans lequel la colonne est reliée à un organe d'assemblage et cet organe, à la carrosserie du véhicule par des moyens de fixation, les moyens de fixation comprenant des moyens d'accrochage de l'organe sur la carrosserie et des moyens adaptés pour engendrer un effort mécanique entra cet organe et la carrosserie pour assurer une fixation sous contrainte de cet organe sur la carrosserie, caractérisé en ce qu'il comporte, à proximité de l'une des extrémités de l'organe, les moyens d'accrochage qui comprennent au moins un élément en forme de crochet adapté pour coopérer avec un élément en forme de patte d'accrochage, et en ce que les moyens adaptés pour engendrer un effort mécanique entre cet organe et la carrosserie comprennent, à proximité de l'autre extrémité de cet organe, des moyens de serrage de l'organe sur la carrosserie, et entre ces moyens d'accrochage et de serrage, des moyens tendant à écarter cet organe de la carrosserie.

L'invention sera mieux comprise à l'aide de la description qui va suivre, donnée uniquement A titre d'exemple et faite en se référant aux dessins annexés, sur lesquels :
- la Fig. 1 représente une vue de côté d'un dispositif de fixation selon l'invention; et
- la Fig. 2 représente une vue de dessus en coupe partielle du dispositif de fixation selon l'invention.

Ainsi qu'on peut le voir sur ces figures, une colonne de direction 1 d'un véhicule automobile est reliée à un organe d'assemblage 2 par tout moyen connu en soi et cet organe d'assemblage est relié au reste de la carrosserie du véhicule, désignée par la référence générale 3, par des moyens de fixation.

Selon l'invention, ces moyens de fixation comprennent des moyens d'accrochage 4 de l'organe sur la carrosserie et des moyens 5, 6 adaptés pour engendrer un effort mécanique entre cet organe et la carrosserie pour assurer une fixation sous contrainte de l'organe sur la carrosserie.

Dans le mode de réalisation représenté sur ces figures, le dispositif selon l'invention comporte à proximité de l'une des extrémités de l'organe d'assemblage 2, les moyens d'accrochage 4 de l'organe d'assemblage sur la carrosserie du véhicule, à proximité de l'autre extrémité de cet organe des moyens de serrage 5 de cet organe sur la carrosserie et entre ces moyens d'accrochage et de serrage, des moyens 6 tendant à écarter cet organe de la carrosserie.

Avantageusement, les moyens d'accrochage comprennent au moins un élément 7 en forme de crochet adapté pour coopérer avec un élément 8 en forme de patte d'accrochage.

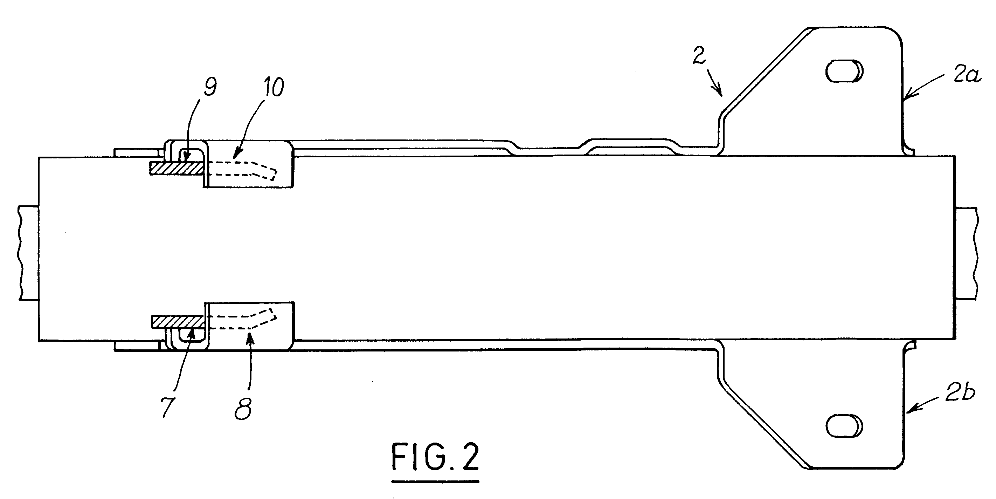

Dans le mode de réalisation représenté, un élément en forme de crochet et un élément en forme de patte d'accrochage sont prévus de part et d'autre de l'organe d'assemblage 2, ces différents éléments étant référencés 7,8,9 et 10 (Fig.2). Comme on peut le voir sur la Fig.2, les extrémités des éléments en forme de crochet sont avantageusement repliées en direction de l'axe de la colonne pour obtenir une meilleure sécurité d'accrochage.

Les éléments en forme de crochet 7 et 9 peuvent être reliés au reste de la carrosserie du véhicule, tandis que les éléments en forme de patte d'accrochage 8 et 10 peuvent être reliés à l'organe d'assemblage et sont constitués par exemple par des parties en saillie repliées vers l'intérieur ou l'extérieur de celui-ci.

Bien entendu, l'inverse peut également être prévu, à savoir que les éléments en forme de crochets peuvent être reliés à l'organe d'assemblage et les éléments en forme de patte d'accrochage, au reste de la carrosserie.

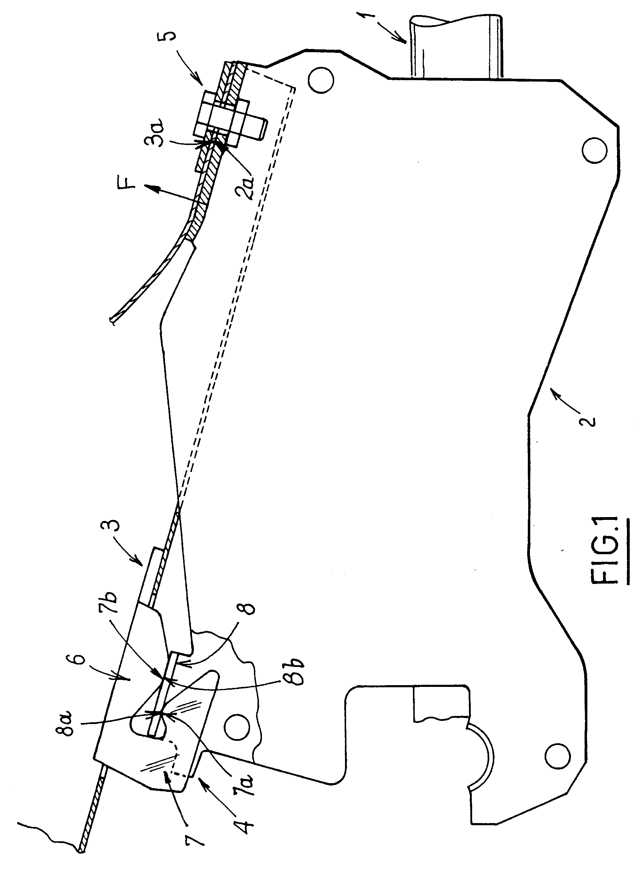

Comme cela est représenté plus particulièrement sur la Fig.1, les moyens tendant à écarter l'organe d'assemblage de la carrosserie peuvent être constitués par un bossage 6 de cet élément en forme de crochet. Dans ce cas, le ou chaque élément en forme de crochet comporte une première zone de contact 7a adaptée pour coopérer avec une première zone de contact correspondante 8a du ou de chaque élément en forme de patte et une seconde zone de contact 7b, formée par le sommet du bossage 6, opposée et décalée par rapport A la première en direction des moyens de serrage 5, adaptée pour coopérer avec une seconde zone de contact correspondante 8b du ou de chaque élément en forme de patte, opposée et décalée par rapport à la première en direction des moyens de serrage, de manière à limiter le déplacement du ou de chaque élément en forme de patte d'accrochage.

Par ailleurs, la surface d'appui 2a de l'organe d'assemblage sur la carrosserie au niveau des moyens de serrage 5 et la surface d'appui correspondante 3a de la carrosserie, sont écartées ou espacées lorsque le ou chaque élément en forme de patte est en appui sur les deux zones de contact du ou de chaque élément en forme de crochet, en position desserrée des moyens de serrage 5, pour permettre lors du serrage, la mise sous contrainte des éléments en forme de patte entre les zones de contact 7a et 7b des éléments en forme de crochet pour assurer la fixation sous contrainte de cet organe sur la carrosserie.

En effet, on conçoit que lorsque l'on tend à déplacer l'organe d'assemblage suivant la flèche F sur la Fig. 1, à partir d'une position desserrée, les éléments en forme de patte de celui-ci pivotent dans les éléments en forme de crochet, jusqu'au moment où ces éléments en forme de patte sont en appui d'une part sur les premières surfaces de contact de ces éléments en forme de crochet et d'autre part sur les sommes des bossages, de sorte qu'il est alors possible en poursuivant le déplacement de cet organe, par exemple gràce aux moyens de serrage, de fixer cet organe sous contrainte sur la carrosserie du véhicule.

Dans le mode de réalisation représenté, les moyens de serrage 5 sont constitués par un système à vis-écrou s'engageant par exemple dans des évidements correspondants d'ailes latérales 2a et 2b (Fig.2) de l'organe d'assemblage et permettant de fixer et de serrer celui-ci sur la carrosserie. Une partie de ces moyens est reliée à la carrosserie du véhicule et l'autre à l'organe pour serrer ces deux éléments l'un sur l'autre.

On conçoit donc que le dispositif de fixation selon l'invention consiste à accrocher l'organe d'assemblage sur la carrosserie du véhicule puis à engendrer un effort mécanique entre cet organe et la carrosserie pour assurer la fixation sous contrainte de cet organe sur la carrosserie.

Il va de soi bien entendu que plusieurs modes de réalisation différents peuvent être envisagés.

Ainsi par exemple, les moyens tendant à écarter l'organe d'assemblage de la carrosserie, constitués par le bossage 6 dans ce mode de réalisation, peuvent également être constitués par des moyens élastiques tels qu'un ressort. Par ailleurs, des moyens d'accrochage peuvent également être prévus aux deux extrémités de l'organe d'assemblage, la génération d'un effort mécanique entre cet organe et la carrosserie étant alors assurée par exemple par une came prenant appui d'une part sur la carrosserie et d'autre part sur l'organe d'assemblage et étant déplaçable entre une position de montage de l'organe et une position active de génération de l'effort mécanique.

## Revendications

1. Dispositif de fixation d'une colonne de direction sur la carrosserie d'un véhicule automobile, dans lequel la colonne (1) est reliée à un organe d'assemblage (2), et cet organe, à la carrosserie (3) du véhicule par l'intermédiaire de moyens de fixation, les moyens de fixation comprenant des moyens d'accrochage (4) de l'organe sur la carrosserie et des moyens (5,6) adaptés pour engendrer un effort mécanique entre cet organe et la carrosserie pour assurer une fixation sous contrainte de l'organe sur la carrosserie, caractérisé en ce qu'il comporte, à proximité de l'une des extrémités de l'organe (2), les moyens d'accrochage (4) qui comprennent au moins un élément en forme de crochet (7,9) adapté pour coopérer avec un élément en forme de patte d'accrochage (8,10), et en ce que les moyens adaptés pour engendrer un effort mécanique entre cet organe et la carrosserie comprennent, à proximité de l'autre extrémité de cet organe, des moyens de serrage (5) de l'organe sur la carrosserie, et entre ces moyens d'accrochage et de serrage, des moyens (6) tendant à écarter cet organe de la carrosserie par pivotement autour des moyens d'accrochage (4).

2. Dispositif selon la revendication 1, caractérisé en ce que les moyens d'accrochage comprennent un élément en forme de crochet (7,9) et un élément en forme de patte d'accrochage (8,10), de part et d'autre de l'organe d'assemblage (2).

3. Dispositif selon la revendication 1 ou 2, caractérisé en ce que le ou chaque élément en forme de crochet (7,9) est relié à la carrosserie du véhicule (3) tandis que le ou chaque élément en forme de patte d'accrochage (8,10), est relié à l'organe d'assemblage (2).

4. Dispositif selon l'une quelconque des revendications précédentes, caractérisé en ce que le ou chaque élément en forme de crochet (7) comporte une première zone de contact (7a) adaptée pour coopérer avec une première zone de contact correspondante (8a) du ou de chaque élément en forme de patte d'accrochage (8) et une seconde zone de contact (7b) opposée et décalée par rapport à la première en direction des moyens de serrage (5), adaptée pour coopérer avec une seconde zone de contact correspondante (8b) du ou de chaque élément en forme de patte d'accrochage (8), opposée et décalée par rapport à la première, en direction des moyens de serrage, la surface d'appui (2a) de l'organe d'assemblage et la surface d'appui correspondante (3a) de la carrosserie, au niveau des moyens de serrage (5), étant espacées lorsque le ou chaque élément en forme de patte d'accrochage est en appui sur les deux zones de contact (7a, 7b) du ou de chaque élément en forme de crochet, en position desserrée des moyens de serrage (5), pour permettre lors du serrage, la mise sous contrainte des éléments en forme de patte d'accrochage, entre les zones de contact des éléments en forme de crochet, et donc la fixation sous contrainte de l'organe sur la carrosserie.

5. Dispositif selon la revendication 4, caractérisé en ce que la seconde zone de contact du ou de chaque élément en forme de crochet est formée par le sommet d'un bossage (6) de celui-ci, opposé et décalé en direction des moyens de serrage, par rapport à la première zone de contact de celui-ci.

6. Dispositif selon l'une quelconque des revendications précédentes, caractérisé en ce que les moyens de serrage (5) comprennent au moins un système à vis-écrou dont une partie est reliée à la carrosserie du véhicule et l'autre à l'organe d'assemblage.

## Claims

1. Device for fixing a steering column to the bodywork of a motor vehicle, wherein the column (1) is connected to an assembly member (2) and this member is connected to the bodywork (3) of the vehicle via fixing means, the fixing means comprising means (4) for attaching the member to the bodywork and means (5, 6) adapted to produce a mechanical force between said member and the bodywork in order to ensure that the member is fixed under stress to the bodywork, characterised in that it comprises, close to one end of the member (2), attachment means (4) which comprise at least one element in the form of a hook (7, 9) adapted to cooperate with an element in the form of a hooking lug (8, 10), and in that the means adapted to produce a mechanical force between the member and the bodywork comprise, close to the other end of said member, means (5) for clamping the member to the bodywork, and between these attachment means and clamping means, means (6) tending to move said member away from the bodywork by pivoting about the attachment means (4).

2. Device according to claim 1, characterised in that the attachment means comprise a hook-shaped element (7, 9) and an element in the form of a hooking lug (8, 10), on each side of the assembly member (2).

3. Device according to claim 1 or 2, characterised in that the or each hook-shaped member (7, 9) is connected to the bodywork of the vehicle (3) whereas the or each element in the form of a hooking lug (8, 10) is connected to the assembly member (2).

4. Device according to any one of the preceding claims, characterised in that the or each hook-shaped element (7) comprises a first contact zone (7a) adapted to cooperate with a corresponding first contact zone (8a) of the or each element in the form of a hooking lug (8) and a second, opposite contact zone (7b) which is offset relative to the first in the direction of the clamping means (5), adapted to cooperate with a corresponding second contact zone (8b) of the or each element in the form of a hooking lug (8), which is opposite to and offset from the first, in the direction of the clamping means, the abutment surface (2a) of she assembly member and the corresponding abutment surface (3a) of the bodywork, at the level of the clamping means (5), being spaced apart when the or each element in the form of a hooking lug abuts on the two contact zones (7a, 7b) of the or each hook-shaped element, in the released position of the clamping means (5), to enable the elements in the form of hooking lugs to be put under stress during clamping between the contact zones of the hook-shaped elements, and hence to enable the member to be fixed under stress to the bodywork.

5. Device according to claim 4, characterised in that the second contact zone of the or each hook-shaped element is formed by the top of a boss (6) thereon, opposite the first contact zone of said element and offset relative thereto in the direction of the clamping means.

6. Device according to any of the preceding claims, characterised in that the clamping means (5) comprise at least one screw-nut assembly, one part of which is connected to the bodywork of the vehicle whilst the other part is connected to the assembly member.

## Patentansprüche

1. Vorrichtung für die Befestigung einer Lenksäule an dem Aufbau eines Kraftfahrzeuges, in der die Lenksäule (1) an einem Montagelement (2) und dieses Montageelement über Befestigungsmittel an dem Fahrzeugaufbau (3) des Kraftfahrzeuges befestigt ist, und diese Befestigungsmittel Mittel (4) für das Einhängen des Elementes an dem Fahrzeugaufbau aufweisen, sowie Mittel (5, 6) die geeignet sind, eine mechanische Kraft zwischen diesem Element und dem Fahrzeugaufbau aufzubauen, um eine Befestigung unter Last dieses Elementes an dem Fahrzeugaufbau zu ermöglichen,
**dadurch gekennzeichnet**, **daß**
sie in der Nähe eines der Enden des Elementes (2) Einhängmittel (4) aufweist, welche mindestens ein Element in Form eines Hakens (7, 9) enthalten, welcher mit einem Element in Form einer Befestigungsöse (8, 10) zusammenwriken kann, und dadurch, daß die Mittel für die Erzeugung einer mechanischen Kraft zwischen diesem Element und dem Fahrzeugaufbau in der Nähe des anderen Endes dieses Elementes Mittel (5) für das Festklemmen dieses Elementes an dem Fahrzeugaufbau aufweisen, und zwischen den Mitteln für das Einhängen und das Festklemmen Mittel (6) enthalten, welche dieses Element durch Schwenken um die Einhängmittel (4) von dem Fahrzeugaufbau abspreizen.

2. Vorrichtung nach Anspruch 1,
**dadurch gekennzeichnet**, **daß**
die Einhängmittel ein Element in Form eines Hakens (7, 9) sowie ein Element in Form einer Befestigungsöse (8, 10) aufweisen, die jeweils an beiden Seiten des Montagelementes (2) angeordnet sind.

3. Vorrichtung nach einem der Ansprüche 1 oder 2,
**dadurch gekennzeichnet**, **daß**
das oder die Elemente (7, 9) in Form eines Hakens an dem Aufbau des Kraftfahrzeuges (3) befestigt sind, während das oder die Elemente in Form einer Befestigungsöse (8, 10) mit dem Montageelement (2) verbunden sind.

4. Vorrichtung nach einem der vorausgegangenen Ansprüche,
**dadurch gekennzeichnet**, **daß**
das oder die Elemente in Form eines Hakens (7) einen ersten Kontaktbereich (7a) aufweisen, der so beschaffen ist, daß er mit einem ersten entsprechenden Kontaktbereich (8a) des oder der Elemente in Form einer Befestigungsöse (8) zusammenwirken kann, sowie einen zweiten gegenüberliegenden Kontaktbereich (7b), welcher gegenüber dem ersten Kontaktbereich in Richtung der Klemmmittel (5) versetzt angeordnet und dafür ausgelegt ist, mit einem zweiten entsprechenden Kontaktbereich (8b) des oder der einzelnen Elemente in Form einer Befestigungsöse (8), der gegenüber dem ersten Kontaktbreich und versetzt dazu angeordnet ist, in Richtung der Klemmmittel zusammenzuwirken, wobei die Auflagefläche (2a) des Montagelementes und die entsprechende Auflagefläche (3a) des Fahrzeugaufbaus an den Klemmitteln (5) im Abstand angeordnet sind, wenn sich das oder die einzelnen Elemente in Form einer Befestigungsöse an den beiden Kontaktbreichen (7a, 7b) des oder Elemente in Form eines Hakens in gelockerter Stellung der Klemmmittel (5) abstützen, um beim Festklemmen eine Vorspannung der Elemente in Form einer Befestigungsöse zwischen den Kontaktbereichen der Hakenelemente und damit die Befestigung unter Last dieses Elementes an dem Fahrzeugaufbau zu ermöglichen.

5. Vorrichtung nach Anspruch 4,
**dadurch gekennzeichnet**, **daß**
der zweite Kontaktbereich des oder der einzelnen Elemente in Form eines Hakens durch die Spitze eines Wulstes (6) desselben gebildet wird, der gegenüber und versetzt zu der Richtung der Klemmmittel im Vergleich zu dem ersten Kontaktbereich derselben angeordnet ist.

6. Vorrichtung nach einem der vorausgegangenen Ansprüche,
**dadurch gekennzeichnet**, **daß**
die Klemmmittel (5) mindestens ein System aus Schrauben und Muttern aufweisen, von dem ein Teil mit dem Fahrzeugaufbau und das andere Teil mit dem Montageelement verbunden ist.
